# EUROPEAN PATENT APPLICATION

(11) **EP 2 161 803 A2**
(43) Date of publication of application: **10.03.2010**
(21) Application number: 09168752.5
(22) Date of filing: 26.08.2009
(51) Int. Cl.: H02B 1/54

(54) **Dampened Series Capacitor Platform**

(30) Priority: 05.09.2008 US 205030
(71) Applicant: General Electric Company, Schenectady, NY 12345 (US)
(72) Inventor: Lumpkin, JR., Brian D., Brandon, MS 39211 (US); Datka, Paul J., Ballston Spa, NY 12020 (US); Gundy, William E., Hailey, ID 83333 (US); Ruddell, Geoffrey A., Newburgh, IN 47630 (US)
(74) Representative: Gray, Thomas

(57) **Abstract**

An electrical platform (2) includes a support structure (4) for bearing electrical equipment (8); two or more legs (12) extending from the support structure (4); a brace (30) extending between at least two of the legs (12); and a damper (50) arranged on the brace.

## Description

### BACKGROUND OF THE INVENTION

### 1. Technical Field

The subject matter described here generally relates to static structures with cross-bracing for compensating earth-transmitting force, and, more particularly, to series capacitor platforms with friction spring damping.

### 2. Related Art

Electrical platforms are often used to raise high voltage equipment a safe distance off of the ground. For example, series capacitor banks and/or other equipment may be arranged on galvanized steel or aluminum structures that are supported by post-type insulators. Universal joints are often provided in order to assure that these insulators do not experience moment loads. Diagonal support bracing, including porcelain post-type or fiberglass reinforced polymer string insulators, may also be provided in order to handle any horizontal loads. In seismically-active areas, these and other components of such electrical platforms must often be reinforced in order to provide an adequate level of rigidity that will accommodate transient loading events.

### BRIEF DESCRIPTION OF THE INVENTION

These and other drawbacks associated with such conventional approaches are addressed here in by providing, in various embodiments, an electrical platform including a support structure for bearing electrical equipment; two or more legs extending from the support structure; a brace extending between at least two of the legs; and a damper arranged on the brace.

### BRIEF DESCRIPTION OF THE DRAWINGS

There follows a detailed description of embodiments of the invention by way of example only, with reference to the accompanying drawings, in which:
FIG. 1 is a side view of a series capacitor platform;
FIG. 2 is another side view of the series capacitor platform shown in FIG. 1;
FIG. 3 is an orthographic view of the top universal joint from FIGs. 1 and 2;
FIG. 4 is an orthographic view of the bottom universal joint from FIGs. 1 and 2; and
FIG. 5 is a side view of the adjuster plate assembly from FIGs 1 and 2.

### DETAILED DESCRIPTION OF THE INVENTION

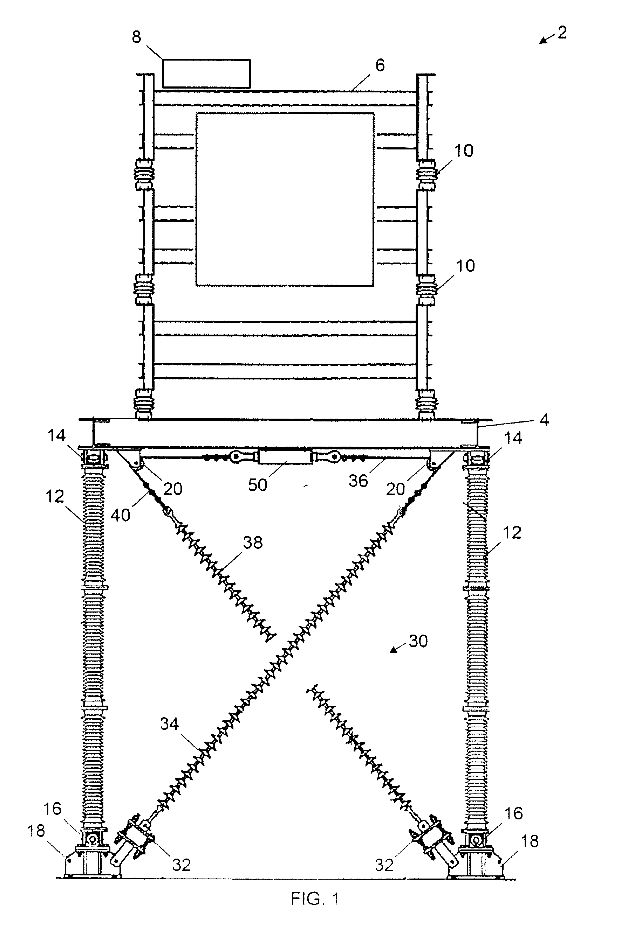

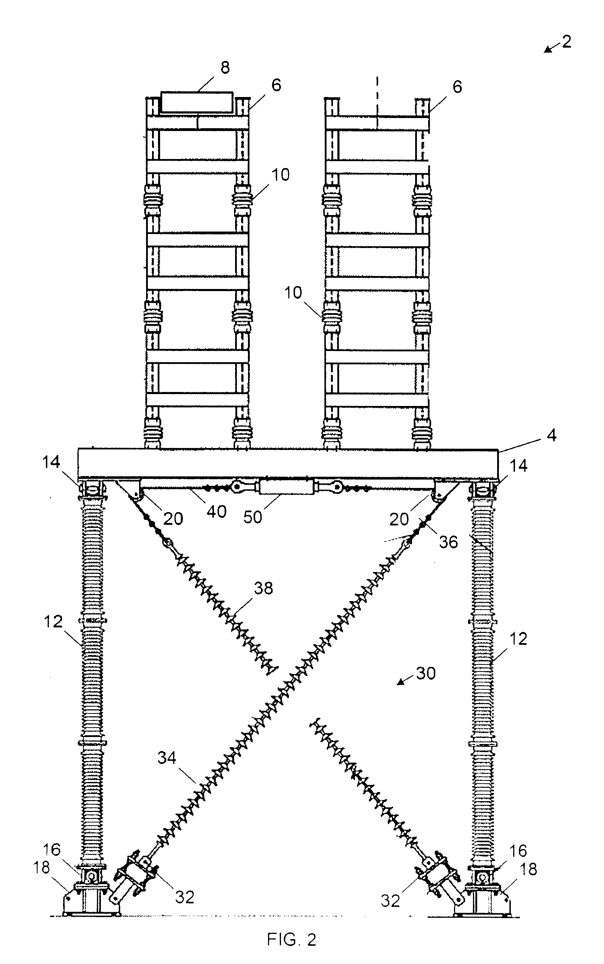

FIGs. 1 and 2 are orthogonal side, elevation views of an electrical platform 2 including a support structure 4 for bearing electrical equipment such a the illustrated capacitor rack frames 6 for bearing one or more series capacitor banks 8. For example, the capacitor rack frame 8 may in clued one or more rack insulators 10. However, any other electrical equipment and/or frame may also be arranged on the support structure 4 including, but not limited to, switchgear and transformers.

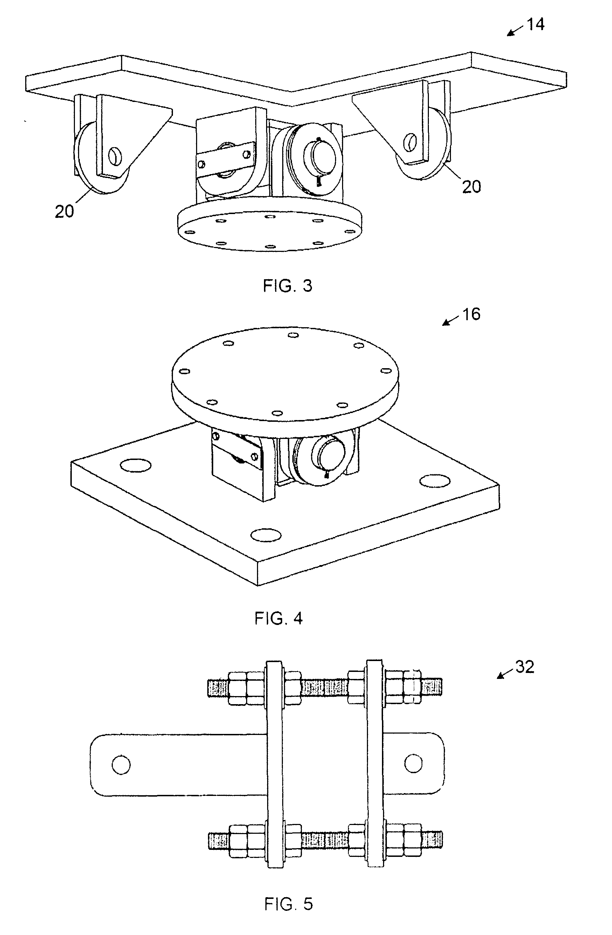

In this example, four legs 12 extending from the support structure 2. The illustrated legs 12 are also configured as columns of porcelain insulators. However, other configurations and/or materials may be provided along with any other number of legs. As detailed in FIGs. 3 and 4, a top universal joint 14 is provided at the top of each columnar leg 12, and a bottom universal joint 16 at the bottom of each leg rests on a column support base 18 at the bottom of each leg. Some or all of the legs 12 may alternatively be provided without some or all of the universal joints 14 and 16 and column support bases 18.

In the examples illustrated here, the top universal joint 14 is part of an assembly that includes a sheave or pulley 20 arranged on one or both orthogonal sides of the universal joint. The pulleys 20 may also be secured to the support structure 4 and or the legs 12, and some or all of the pulleys may be arranged in a similar assembly with the bottom universal joints 16. In addition, some or all of the pulleys 20 may be arranged at other angles relative to the legs 12 and/or support structure 4.

A brace 30 extends continuously between each of the legs 12 on the same side of the electrical platform 2. However, the brace 30 may also be arranged to extend between additional legs 20, including legs on opposite sides or corners of the electrical platform 2. The missing portion of the brace 30 where it crosses over itself has been exaggerated in these drawings merely to show that the missing portion of the brace is arranged behind the front portion of the brace.

The braces 30 include an optional an adjuster plate assembly 32 as shown in FIG. 5 for tensioning the brace and securing the brace to the column support base 18 on the leg 12. However, the braces 30 may also be secured to the top or bottom of the legs 12 in other ways, with or without the adjuster plate assembly 32. A first insulator segment 34 is attached at one end to the adjuster plate assembly 32, extending from one of the legs or columns 12. For example, the insulator segments may be formed from polymer, or other types of, insulators. A first cable segment 36 then extends from the first insulator segment 32 and around one of the pulleys 20. A second insulator segment 38 extends from another of the legs to a second cable segment 40 that is similarly wrapped around another of the pulleys 20.

A damper 50 or other shock absorbing device connects the first cable segment to the second cable segment between the two pulleys 20. For example, the damper 50 may be a spring damper, such as a friction spring damper. Various suitable bidirectional friction spring dampers are available from Ringfeder Corporation, including what is sometimes referred to as a 12400 Ring Spring. The damper 50 may also be arranged at other location in the brace 30 and/or at other locations around the electrical platform 2.

Seismic tests that were conducted on the electrical platform 2 described above showed a reduction in peak basic shear and overturning of approximately 40% when the dampers 50 were included. The damping ration also increased from approximately 11% without the dampers 50 to approximately 15-16% with the dampers. The design therefore provides improved seismic resistance without the otherwise significant increases in cost from adding more material to the structure.

It should be emphasized that the embodiments described above, and particularly any "preferred" embodiments, are merely examples of various implementations that have been set forth here to provide a clear understanding of various aspects of this technology. One of ordinary skill will be able to alter many of these embodiments without substantially departing from scope of protection defined solely by the proper construction of the following claims.

## Claims

1. An electrical platform (2), comprising:
a support structure (4) for bearing electrical equipment (6);
a plurality of legs (12) extending from the support structure (4);
a brace (30) extending between at least two of the plurality of legs (12); and
a damper (50) arranged on the brace (30).

2. The electrical platform recited in claim 1, further comprising a series capacitor bank (6) arranged on the support structure (4).

3. The electrical platform recited in claim 1 or 2, wherein the damper (50) comprises a friction spring damper.

4. The electrical platform recited in claim 3, wherein the friction spring damper (50) comprises a bidirectional friction spring damper.

5. The electrical platform recited in any of the claims above, wherein the brace (30) comprises a cable.

6. The electrical platform recited in claim 4, wherein the brace (30) further comprises a cable (40, 36) extending from each end of the bi-directional friction spring damper.

7. The electrical platform recited in any of the claims above, wherein each of the legs (12) comprises at least one universal joint (14, 16) arranged at an end of each leg.

8. The electrical platform recited in claim 1, wherein each of the legs comprises a universal joint arranged at each end of each leg.

9. The electrical platform recited in any of the claims above, wherein each of the legs (12) comprises an insulated column.

10. The electrical platform recited in claim 10, wherein the brace further comprises at least one insulator arranged between each leg and the cable.

11. An electrical platform, comprising:
a support structure for bearing electrical equipment;
a plurality of insulated columns extending from the support structure;
a pulley secured an end of each of the insulated columns;
a brace extending between at least two of the columns; the brace comprising:
a first insulator segment extending from one of the columns;
a first cable segment extending from the first insulator segment and around one of the pulleys;
a second insulator segment extending from another of the columns; and
a second cable segment extending from the second insulator segment and around another of the pulleys; and
a friction spring damper connecting the first cable segment to the second cable segment between the two pulleys.

12. The electrical platform recited in claim 11, wherein the pulleys are secured at the top end of the columns.

13. The electrical platform recited in claim 12, wherein each insulator segment extends from a bottom of the respective column.

14. The electrical platform recited in claim 13, wherein each insulator segment extends toward a pulley on another column.

15. The electrical platform recited in claim 14, further comprising a series capacitor bank arranged on the support structure.
